# EUROPEAN PATENT APPLICATION

(11) **EP 3 706 014 A1**
(43) Date of publication of application: **09.09.2020**
(21) Application number: 20153463.3
(22) Date of filing: 23.01.2020
(51) Int. Cl.: G06F 16/73, G06F 16/78

(54) **METHODS, APPARATUSES, DEVICES, AND STORAGE MEDIA FOR CONTENT RETRIEVAL**

(30) Priority: 11.02.2019 CN 201910110096
(71) Applicant: Beijing Baidu Netcom Science and Technology Co., Ltd., Beijing 100085 (CN)
(72) Inventor: WANG, Can, Beijing, 100085 (CN); KUANG, Zhijie, Beijing, 100085 (CN)
(74) Representative: advotec.

(57) **Abstract**

According to exemplary embodiments of the present disclosure, methods, apparatuses, devices, and computer-readable storage media for content retrieval are provided. The method for establishing a content retrieval library includes: acquiring identity information of content to be processed, the identity information including a plurality of information items, and each information item being associated with a portion of the content. The method further includes determining a key character corresponding to at least one portion of the content based on the identity information. The method further includes storing the key character and indication information related to at least one portion of the content into the content retrieval library in an associated manner.

## Description

### FIELD

Embodiments of the present disclosure mainly relate to the field of computers, and more particularly, to methods, apparatuses, devices, and computer-readable storage media for content retrieval.

### BACKGROUND

With the increase in quantity and quality for videos, people have increasing demands on video retrieval. The retrieval of a classical or popular clip in a video is a significant aspect of such increasing. One may learn about video clips from person's descriptions such as "Zhenhuan returns to the Palace" or classical lines such as "I truly can't bear it". Such descriptions or classical lines are referred to herein as buzz words. The user wants to use a buzz word to retrieve a clip in the video corresponding to the buzz word and to obtain the location and context of the clip in the video, and so on. However, with the conventional video retrieval approaches, the user cannot directly locate a corresponding video or video clip according to the buzz word.

### SUMMARY

Exemplary embodiments of the present disclosure provide a solution for content retrieval.

According to a first aspect of the present disclosure, a method for establishing a content retrieval library is provided. The method includes acquiring identity information of content to be processed, in which the identity information includes a plurality of information items, and each information item is associated with a portion of the content. The method further includes determining a key character corresponding to at least one portion of the content according to the identity information. Furthermore, the method includes storing the key character and indication information related to the at least one portion of the content into the content retrieval library in an associated manner.

According to a second aspect of the present disclosure, a method for content retrieval is provided. The method includes determining a retrieval term according to a query request for a target portion of content. The method further includes determining a key character matched with the retrieval term from a content retrieval library, in which the content retrieval library at least includes the key character and indication information stored in an associated manner with the key character and about the target portion, the key character is determined according to an information item associated with the target portion, and the information item is included in identity information of the content. Furthermore, the method includes acquiring the indication information stored in the associated manner with the key character from the content retrieval library. The method also includes providing the indication information to indicate the target portion.

According to a third aspect of the present disclosure, an apparatus for establishing a content retrieval library is provided. The apparatus includes an identity information acquisition module, configured to acquire identity information of content to be processed, in which the identity information includes a plurality of information items, and each information item is associated with a portion of the content. The apparatus further includes a key character determination module, configured to determine a key character corresponding to at least one portion of the content according to the identity information. The apparatus further includes a key character storage module, configured to store the key character and indication information related to the at least one portion of the content into the content retrieval library in an associated manner.

According to a fourth aspect of the present disclosure, an apparatus for content retrieval is provided. The apparatus includes a retrieval term determination module, configured to determine a retrieval term according to a query request for a target portion of content. The apparatus further includes a key character retrieval module, configured to determine a key character matched with the retrieval term from a content retrieval library, in which the content retrieval library at least includes the key character and indication information stored in an associated manner with the key character and about the target portion, the key character is determined according to an information item associated with the target portion, and the information item is included in identity information of the content. The apparatus further includes an indication information acquisition module, configured to acquire the indication information stored in the associated manner with the key character from the content retrieval library. Furthermore, the apparatus includes an indication information providing module, configured to provide the indication information to indicate the target portion.

According to a fifth aspect of the present disclosure, a device is provided. The device includes one or more processors; and a storage device, configured to store one or more programs, in which when the one or more programs are executed by the one or more processors, the one or more processors are configured to implement the method according to the first aspect of the present disclosure.

According to a sixth aspect of the present disclosure, a device is provided. The device includes one or more processors; and a storage device, configured to store one or more programs, in which when the one or more programs are executed by the one or more processors, the one or more processors are configured to implement the method according to the second aspect of the present disclosure.

According to a seventh aspect of the present disclosure, a computer-readable storage medium having a computer program stored thereon is provided, in which when the program is executed by a processor, the program implements the method according to the first aspect of the present disclosure.

According an eighth aspect of the present disclosure, a computer-readable storage medium having a computer program stored thereon is provided, in which when the program is executed by a processor, the program implements the method according to the second aspect of the present disclosure.

It should be understood that the Summary is not intended to limit key or critical features of the embodiments of the present disclosure, nor is intended to limit the scope of the present disclosure. Other features of the present disclosure will become apparent from the following description.

### BRIEF DESCRIPTION OF THE DRAWINGS

The above and other features, advantages and aspects of the embodiments of the present disclosure will become more apparent with reference to the following detailed description in combination with the accompanying drawings. In the drawings, identical or similar reference numerals indicate identical or similar elements.
FIG. 1 is a schematic diagram of an example environment in which various embodiments of the present disclosure may be implemented.
FIG. 2 is a flowchart of a process for establishing a content retrieval library according to some embodiments of the present disclosure.
FIG. 3 is a flowchart of a process for determining a key character according to some embodiments of the present disclosure.
FIG. 4 is a schematic diagram of determining at least one portion of content according to some embodiments of the present disclosure.
FIG. 5 is a flowchart of a process for content retrieval according to some embodiments of the present disclosure.
FIG. 6 is a schematic block diagram of an apparatus for establishing a content retrieval library according to some embodiments of the present disclosure.
FIG. 7 is a schematic block diagram of an apparatus for content retrieval according to some embodiments of the present disclosure.
FIG. 8 is a block diagram of a computing device capable of implementing various embodiments of the present disclosure.

### DETAILED DESCRIPTION

Embodiments of the present disclosure will be described in more detail below with reference to the accompanying drawings. While certain embodiments of the present disclosure have been illustrated in the accompanying drawings, it is to be understood that the present disclosure may be embodied in various forms and should not be construed as being limited to the embodiments set forth herein. Instead, these embodiments are provided for a thorough and complete understanding of the present disclosure. It should be understood that the drawings and embodiments of the present disclosure are for illustrative purposes only and are not intended to limit the scope of the present disclosure.

In the description of the embodiments of the present disclosure, the term "include" and its equivalents should be construed as open-ended inclusions, i.e., "include, but is not limited to". The term "according to" is to be understood as "at least partially according to". The term "an embodiment" or "the embodiment" should be understood as "at least one embodiment". Terms "first", "second" and the like may refer to different or identical objects. Other explicit and implicit definitions may also be included below.

As mentioned previously, the user wants to obtain corresponding videos or video clips with buzz words. Conventionally, there are two retrieval methods, one of which is that the user searches for buzz words directly. Currently, text-based video searching is mainly based on titles of videos. When the user searches for buzz words related to videos, returned results usually are manually-edited video clips containing the buzz words in titles. This approach relies on manual editing on the videos and results in a lot of irrelevant contents. The video clips obtained by this method have the following problems: there is no guarantee in quality, no classification of sharpness, and a possibility in low-quality editing; the user cannot conveniently jump to relevant previous and afterward episodes of the video; the user cannot watch information such as bullet comments on and reviews of the original video; and the editor cannot know the length of the video clip required by the user, so that the edited video clip is possibly too short for the user to know the context, and thus the user cannot well understand the wonderful degree of the edited video clip, or the video clip is too long and the time point needed by the user is not marked, and thus the user cannot find the needed clip quickly.

In another conventional retrieval method, the user needs to search several times. For example, the user searches "episode of Story of Yanxi Palace that Wei Yingluo goes to the Old Summer Palace", and then finds the corresponding episode from a video website and the corresponding clip based on the search result, or the user needs to continue searching "time point of episode 54 of Story of Yanxi Palace that Wei Yingluo goes to the Old Summer Palace". This approach leads to indirect result returns. For the solution of searching for a desired episode and a time point corresponding to the buzz words for several times, the user needs to perform retrievals. In addition, in different versions of video resources, the same video clip may present in different episodes and time points, so that the user may not get the correct answer.

At present, a majority of video websites have the bullet screen function, and netizens who have watched relevant videos may spontaneously contribute to description of their favorite video clips. Hot video clips receive a great number of bullet comments. Netizens may repeat some classical lines, for example, "I truly can't bear it", in the bullet screens; and some netizens will summarize and describe classical segments, for example, "Zhenhuan returns to the Palace". Compared with the case of directly using the lines, the bullet comments summarize videos, for example, the sentence "Zhenhuan returns to the Palace" may appear in the bullet comments, rather than in lines of a corresponding segment. Accordingly, a content retrieval library may be established using identity information of, for example, bullet comments, to provide content of interest, such as videos or video clips, to the user.

According to an embodiment of the present disclosure, a solution for content retrieval is provided. In this solution, a key character corresponding to at least one portion of content and associated indication information are determined according to identity information associated with different portions of the content, thereby a content retrieval library is established. When performing content retrieval, a key character matching a retrieval term is determined from the content retrieval library, and indication information related to the content or a portion of the content and stored in association with the key character is provided to the user. In this manner, information on content of interest (such as video clips) may be quickly and accurately provided to the user without requiring searches by the user. Furthermore, the solution facilitates the user viewing other content related to the content of interest. Therefore, the solution of the present disclosure may advantageously realize the content retrieval with high efficiency and improved user experience.

Embodiments of the present disclosure will be described in detail below with reference to the accompanying drawings.

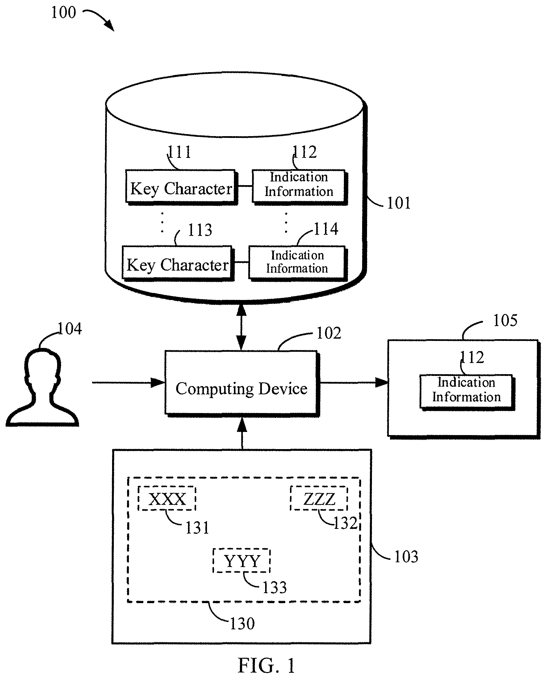

FIG. 1 is a schematic diagram of an example environment 100 in which various embodiments of the present disclosure may be implemented. In the example environment 100, a content retrieval library 101 is established by a computing device 102 according to identity information 130 of content 103. The identity information 130 includes a plurality of information items 131-133. Each information item is associated with a portion of the content 103.

The content 103 may be of various types. The identity information 130 may be in various forms, so long as such forms enable the identity information 130 to include information items associated with or corresponding to different portions of the content 103. Such identity information may be bullet comments temporally associated with a clip of a video or an audio, real-time comments of a live video, labels or annotations of a document or an e-book, or the like.

For example, the content 103 may be a video, such as a movie, an episode or episodes of a TV show, an episode or episodes of a variety show; and the identity information 130 may be bullet comments of a video and each information item may be one bullet comment. The content 103 may also be an audio, such as a segment of a crosstalk; and the identity information 130 may be comments or feedback information similar to bullet comments from the listener. In some embodiments, subtitles for video may also be used as the identity information, for example, together with the bullet comments. The content 103 may also be an electronic document such as an e-book; and the identity information 130 may be labels made by the reader for different paragraphs of the electronic document. Each information item is one label.

The computing device 102 may establish the content retrieval library 101 according to the identity information 130 as well as the identity information for other contents. For example, the computing device 102 may generate a key character 111 corresponding to at least one portion of the content 130 according to the identity information 130, and indication information 112 regarding the at least one portion of the content 130. For example, the key character 111 may correspond to a classic segment in a certain television series. The computing device 102 may also generate another key character 113 and indication information 114 associated with the other key character 113 according to the identity information of the other content. The key characters 111 and 113 and their associated indication information 112 and 114 are stored in the content retrieval library 101 in an associated manner. It should be understood that although only two key characters 111 and 113 are shown in FIG. 1, the two key characters are merely illustrative. Any number of key characters and indication information generated according to any number of contents may be included in the content retrieval library 101. In addition, different key characters may also be generated by different computing devices.

In the example environment 100, content retrieval is performed by the computing device 102. The computing device 102 receives a query request from a user 104 and for target content (e.g., a piece of video), and queries the content retrieval library 101 to provide a query result 105. The query result 105 may include, for example, the indication information 112, such that the user 104 may obtain the target content, such as video or video clip that the user is interested in, according to the indication information 112.

In the example environment 100 of FIG. 1, the content retrieval library 101 is established and queried by the computing device 102. It should be understood that this is merely exemplary and that the establishing and querying of the content retrieval library 102 may be performed by different computing devices. It should also be understood that the computing device 102 may be a stationary computing device, such as a server, or may be a portable computing device, such as a mobile phone, a tablet computer or the like.

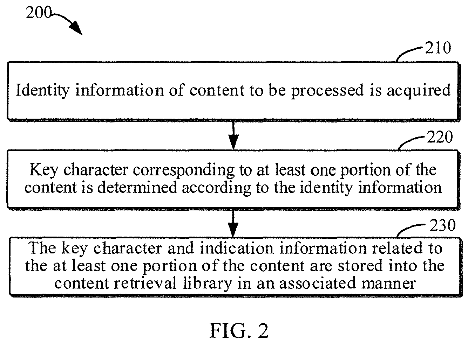

In order to more clearly understand the solution for content retrieval provided by the embodiments of the present disclosure, a method of establishing the content retrieval library according to the embodiments of the present disclosure will be described with reference to FIG. 2. FIG. 2 is a flowchart of a process 200 for establishing the content retrieval library according to some embodiments of the present disclosure. The process 200 may be implemented by the computing device 102 as illustrated in FIG. 1. For ease of discussion, the process 200 will be described in combination with FIG. 1.

At block 210, the computing device 102 acquires the identity information 130 of the content 103 to be processed. The identity information 130 includes a plurality of information items 131-133, and each information item is associated with a portion of the content 103. For example, the computing device 102 may obtain an episode of a certain television series as the content 103. In this case, the identity information 130 may be bullet comments of the video, and the information items 131-133 may be separate bullet comments that appear over different time periods of the video. The bullet comments of the video may be acquired directly from metadata of the video website, or may be obtained by identifying video frames, and the scope of the present disclosure is not limited in this respect. The identity information 130 may further include subtitles, for example, lines or voiceover, of the video.

At block 220, the computing device 102 determines the key character 111 corresponding to at least one portion of the content 103 according to the identity information 130. For example, the computing device 102 may generate the key character 111 corresponding to a clip in the video according to bullet comments of the video.

In some embodiments, the computing device 102 may generate, for each portion of the content 103, the key character corresponding to the portion according to respective information items associated with the portion. For example, the computing device 102 may divide the video into several clips for a predetermined length of time (e.g., 5 minutes), and generate key characters according to the bullet comments that appear during each clip. For example, a bullet comment after noise reduction (see description below) is taken as a key character.

In some embodiments, the computing device 102 may first determine a portion or portions of the content 103 according to the identity information 130, and then generate key characters with information items associated with the determined portions. For example, the computing device 102 may first determine a clip of a video according to a number of bullet comments and then generate the key character with the bullet comments appearing in the video clip. The frequency of the bullet comments may be considered as the natural heat of the bullet comments. For example, the sentence "I truly can't bear it" appears only once in lines of a corresponding video clip, but appears many times in the bullet screen. Thus, in such example, the generated key characters are typically for popular or classic segments of the video, thereby meeting retrieval needs of the user more easily.

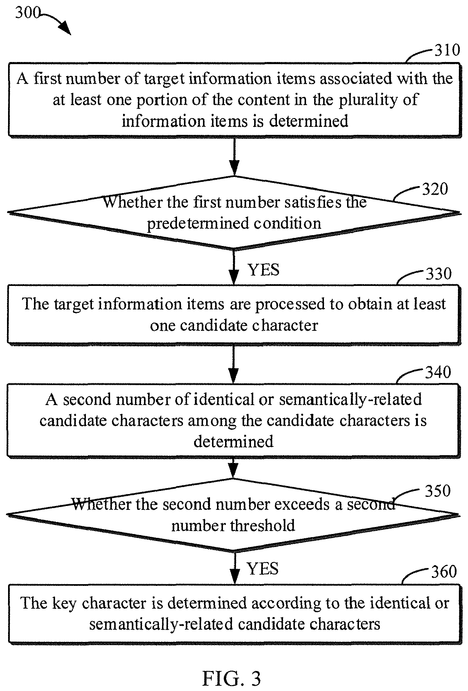

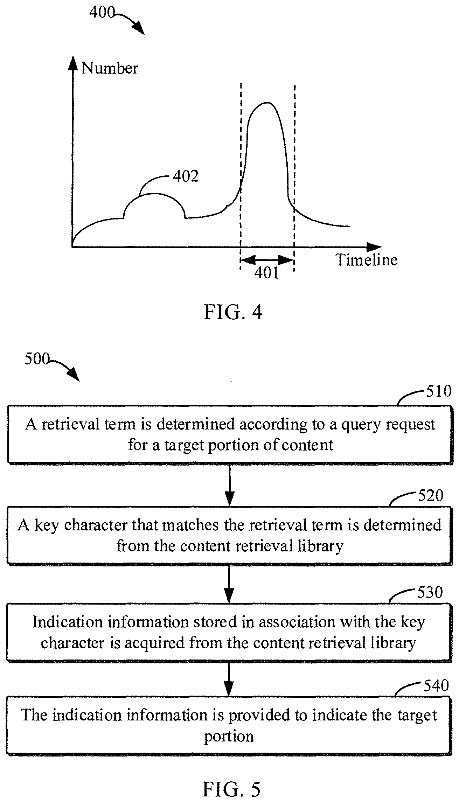

Such embodiment is described below with reference to FIGS. 3 and 4. FIG. 3 is a flowchart of a process 300 for determining the key character according to some embodiments of the present disclosure. The process 300 may be viewed as an implementation of block 220 in FIG. 2.

At block 310, the computing device 102 determines a first number of target information items associated with the at least one portion of the content 103 from the plurality of information items 131-133. At block 320, the computing device 102 determines whether the first number meets a predetermined condition. Such predetermined condition may include at least one of the following items that: the first number exceeds a first number threshold; and a ratio of the first number to a total number of the plurality of information items exceeds a ratio threshold. One or more portions of the content 103 that satisfy the predetermined condition may be considered as portion(s) to be processed.

The above process is described in detail below with the content 103 exampled by a video and the identity information 130 exampled by bullet comments. FIG. 4 is a schematic diagram 400 of determining the at least one portion of content according to some embodiments of the present disclosure. The computing device 102 may determine a video clip 401 in which the bullet comments spring up as the portion to be processed according to a distribution of the bullet comments on a timeline of the video.

In some embodiments, the computing device 102 may divide the video into clips at a large granularity (e.g., 5 minutes) and then calculate the number of bullet comments in each clip. For example, when the number of bullet comments in the video clip 401 exceeds a predetermined number threshold, the video clip 401 may be considered as the portion to be processed. In this example, the number of the bullet comments in the video clip 401 may be considered as the first number and the predetermined number threshold may be considered as the first number threshold.

In some embodiments, the computing device 102 may partition the video at a small granularity. For example, the computing device 102 may divide the video into 10-second clips, calculate the number of bullet comments in each 10-second clip, and determine one clip or several consecutive clips with a bullet comment number satisfying the predetermined condition as the portion to be processed (for example, the video clip 401). In this case, the video clip 401 to be processed may include a plurality of consecutive 10-second clips. In such embodiments, by dividing the video at the small granularity, popular or classical clips in the video may be found more accurately.

The predetermined condition may be defined according to an absolute number and/or a relative number of bullet comments in the divided video clips. For example, the predetermined condition may include that the number of the bullet comments in the divided (e.g., 10-second) video clip exceeds the first number threshold, or the ratio of the number of bullet comments in the divided video clip to the number (or a median) of all bullet comments in the video exceeds the ratio threshold. The first number threshold and the ratio threshold may vary depending on the length of the divided video clips. For example, the first number threshold when the length of the divided video clip is 5 minutes may be greater than the first number threshold when the length of the divided video clip is 10 seconds.

In an example, the following two conditions may be defined: i) the number of bullet comments in the divided video clip exceeds a threshold X; and ii) the number of bullet comments in the divided video clip and the median of bullet comments in all of the video clips exceed or are equal to Y. The condition i) ensures absolute popularity of the screened video clip (the portion to be processed), and the condition ii) ensures that the screened clip is a relatively popular clip in the current video. The particular values of X and Y may be selected based on a variety of factors. For example, when an increase in recall rate is desired, X and Y may be reduced; and when an improvement in recall quality is desired, X and Y may be increased. In addition, the specific values of X and Y may also vary depending on a specific type of the content 103, e.g., for different types of videos (e.g., art films, commercial films).

Although only one video clip 401 is shown in FIG. 4, a plurality of video clips satisfying the predetermined condition may be determined from one video. Furthermore, it should be understood that the predetermined conditions defined above are merely exemplary, and other conditions based on an absolute number and/or a relative number of the information items may also contemplated.

Referring again to FIG. 3, when it is determined at block 320 that the first number satisfies the predetermined condition, the computing device 102 may determine the key character according to the target information items. For example, the computing device 102 may determine the key character (also referred to herein as the buzz word) according to the bullet comments in the video clip 401.

In some embodiments, the computing device 102 may process the target information items to, for example, remove noise. The process 300 may proceed to block 330. At block 330, the computing device 102 may process the target information items to obtain at least one candidate character. Such processing may include performing at least one of the followings on the target information items: removing characters matched with preset characters from the target information items, removing a target information item having a number of characters smaller than a number threshold of characters from the target information items, removing a punctuation mark from the target information items, and removing characters in a predetermined category (e.g., a modal particle) from the target information items.

Again, the video and bullet comments are exampled for illustration. The bullet comments in the video clip 401 in FIG. 4 may be regarded as the target information items. The computing device 102 may perform a denoising process on the bullet screen of the video clip 401. For example, characters that match predetermined characters such as "high energy alert" and "666" may be removed. Such characters may be a separate bullet comment or may be included in bullet comments. As such characters may be repeated in different videos and cannot be used to distinctively identify a certain video clip. Bullet comments with a too short length, such as bullet comments with a number of characters less than a character threshold number, may also be removed. Such bullet screen also does not have distinctness. Characters in a predetermined category, e.g., modal particles (" 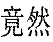 " ("unexpectedly"), " 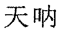 " ("OMG")) may also be removed, so that the obtained candidate character (i.e., denoised bullet comments) is more consistent with the expression of the statement sentence, and that the candidate character is more similar to the retrieval term. In addition, punctuation marks in the bullet comments may be removed.

Characters or sentences obtained after performing one or more of the above processes on the information items are referred to herein as candidate characters, such as "the Emperor Kangxi captures Oboi cleverly". When only one candidate character is obtained at block 330, the candidate character may be used as the key character.

Since identity information such as bullet comments is generally highly repetitive, when a plurality of candidate characters are obtained at block 330, further processing may be performed on the candidate characters, i.e., the process 300 may proceed to block 340 in this case.

At block 340, the computing device 102 may determine a second number (which may also be referred to as character frequency hereinafter) of identical or semantically related candidate characters in the plurality of candidate characters. The plurality of candidate characters herein are determined according to the information items (e.g., the bullet comments of the video clip 401) corresponding to the portion to be processed, and thus the second number or the character frequency is a statistical result for the portion to be processed (i.e., the video clip 401).

In some embodiments, the computing device 102 may simply determine the character frequency of the same candidate character in the plurality of candidate characters. For example, when there are 10 pieces of "the Emperor Kangxi captures Oboi cleverly" among the plurality of candidate characters, it may be determined that the character frequency of the candidate characters "the Emperor Kangxi captures Oboi cleverly" is 10.

In some embodiments, the computing device 102 may determine a number of semantically-related candidate characters in the plurality of candidate characters. For example, the computing device 102 may cluster denoised bullet comments (i.e., candidate characters) by semantic similarity. For example, candidate characters "the Emperor Kangxi captures Oboi cleverly", "the Emperor Kangxi apprehends Oboi" and "the Emperor Kangxi arrests Oboi" may be clustered under the same class. In this case, the character frequency of bullet comments in a time period is defined as the sum of occurrences of all bullet comments in the category to which the bullet comments belong in the time period.

At block 350, the computing device 102 determines whether the second number (i.e., the character frequency) determined at block 340 exceeds a second number threshold, such as a character frequency threshold. The second number threshold or the character frequency threshold may be a fixed value or may be determined by the computing device 102 according to the size of the portion to be processed (e.g., the duration of the video clip 401). When the second number exceeds the second number threshold, the process 300 proceeds to block 360. At block 360, the computing device 102 may determine the key character according to the same or semantically-related candidate characters. For example, assuming that the character frequency threshold is 8 and the character frequency of the candidate characters "the Emperor Kangxi captures Oboi cleverly" is 10, "the Emperor Kangxi captures Oboi cleverly" or similar sentences may be determined as the key character.

In such embodiment, less popular characters may be effectively filtered out by filtering the identity information such as bullet comments through the character frequency to determine key characters. The key characters and related information obtained in this way may better satisfy search requirements of users on popular contents (such as popular video clips).

Through the above process, the computing device 102 may obtain information such as key character, character frequency, the content and the location. For example, for the video and bullet comment examples described above, the computing device 102 may obtain a four tuple (key character, character frequency, the video to which it belongs, time duration in the video). When the content 103 is an electronic book and the identity information 130 is labels of the electronic book made by a reader, the computing device 102 may obtain information such as the key character, the character frequency, the electronic book to which it belongs and pages or paragraphs in the electronic book. Further, it should be understood that a plurality of key characters may be determined for the same portion (e.g., the video clip 401) of the content 103, and that a plurality of such a four tuple may be obtained in turn.

The process 300 shown in FIG. 3 is one example implementation of block 220. In some embodiments, some of blocks 310-360 shown in FIG. 3 may be omitted.

Referring again to FIG. 2, at block 230, the computing device 102 stores the key character 111 and the indication information 112 related to the at least one portion of the content 103 into the content retrieval library 101 in an associated manner. For example, the computing device 102 may store the above-described four tuple into the content retrieval library 101.

The indication information 112 may take a variety of forms. For example, the indication information 112 may include a link for acquiring the at least one portion of the content 103. For the example of the video described above, the indication information 112 may include a URL link for the video. The indication information 112 may also include location information indicating a relative location of the at least one portion in the content 103. For example, the indication information 112 may include the time period of the video clip 401 in the video, such as from the 8th minute to the 12th minute. For the example in which the content 103 is the electronic book, the indication information 112 may include a paragraph or the like of a portion in the electronic book corresponding to the determined key character. The indication information 112 may further include textual information indicating a portion corresponding to the determined key character that is included in the content 103. For example, such indication information 112 may include textual information such as "the retrieved content is located at the 8th minute to the 12th minute of the 54th episode of the TV series Story of Yanxi Palace". The indication information 112 may be stored in one form or a combination of forms to be provided in a subsequent retrieval.

In some embodiments, the computing device 102 may generate additional information associated with the at least one portion of the content 103 (e.g., the video clip 401) and store the additional information and the key character 111 into the content retrieval library 101 in an associated manner. The computing device 102 may obtain one or more of: a number of times that the content 103 is viewed, clicked or downloaded, a number of comments on the content 103, a score of the content 103 and a number of times (i.e., the character frequency) that the key character appears in the information item associated with the at least one portion, and may generate the additional information according to the acquired information. Such additional information may also be referred to as a comprehensive popularity score. In some embodiments, the computing device 102 may further identify the number of people in the video, the volume, etc., to determine the comprehensive popularity score.

For example, the computing device 102 may obtain the number of times that the video is viewed, clicked or downloaded, the number of comments for the video on the video website, and a score of the episode corresponding to the video that is made by Douban, Baidu and so on. And then, the computing device 102 may perform a weighted average on one or more pieces of information and the frequency of the key characters to obtain a comprehensive popularity score. The comprehensive popularity score, as the additional information, may be stored into the content retrieval library 101 in the associated manner with the key character 111. For example, the obtained four tuple (the key character, the video to which it belongs, the time period in the video and the comprehensive popularity score) may be stored into the content retrieval library 101. Or, the key character, the character frequency, the video to which it belongs, the time period in the video, the comprehensive popularity score may also be stored into the content retrieval library 101.

The process 200 of establishing the content retrieval library according to some embodiments of the present disclosure is described above. In this manner, the content retrieval library may be established according to the identity information associated with different portions of the content, e.g., the content retrieval library for popular videos or video clips may be established. Such content retrieval library may allow the user to directly access content of interest without several times of retrievals.

FIG. 5 is a flowchart of a process 500 for content retrieval according to some embodiments of the present disclosure. The process 500 may be implemented by the computing device 102 of FIG. 1. For ease of discussion, the process 500 will be described in combination with FIG. 1. It should be understood that the process 500 may also be implemented by a computing device other than the computing device 102.

At block 510, the computing device 102 determines a retrieval term according to a query request (e.g., from the user 104) for a target portion (e.g., a video clip) of the content 103. For example, the query request from user 104 may be "which episode of the Deer and the Cauldron did the Emperor Kangxi capture Oboi", "the Deer and the Cauldron, the Emperor captures Oboi" and the like, and thus the computing device 102 may determine the retrieval term to be, for example, "the Emperor Kangxi captures Oboi" according to the query request. The query request may also include only, for example, "the Emperor Kangxi captures Oboi", in which case the computing device 102 may directly use "the Emperor Kangxi captures Oboi" as the retrieval term.

At block 520, the computing device 102 determines the key character from the content retrieval library 101 that matches the retrieval term. The content retrieval library 101 may be established according to the solutions described above with reference to FIGS. 2 to 4. A retrieval term matches with a key character, which may refer to that the retrieval term and the key character are identical, related semantically or similar. The content retrieval library 101 at least includes the key character 111 and the indication information 112 stored in association with the key character 111 and about the target portion. The key character 111 is determined according to an information item (e.g., a bullet comment of a video) associated with the target portion, the information item is included in the identity information 130 of the content 103. For example, the computing device 102 may determine from the content retrieval library 101 that the key character "the Emperor Kangxi captures Oboi cleverly" matches the term "the Emperor Kangxi captures Oboi".

At block 530, the computing device 102 retrieves the indication information 112 stored in association with the key character 111 from the content retrieval library 101. For example, the computing device 102 may retrieve from the content retrieval library 101 the indication information, such as a URL link of the video in which it is located and/or which time period in the video the plot related to "the Emperor Kangxi captures Oboi cleverly" is, stored in association with the key character "the Emperor Kangxi captures Oboi cleverly".

At block 540, the computing device 102 provides the indication information 112 (e.g., to the user 104) to indicate the target portion. Providing the indication information may include at least one of: providing a link of the target portion; providing location information to indicate a relative location of the target portion in the content 103; and providing textual information to indicate that the target portion is included in the content 103.

The computing device 102 may provide textual information such as "your content of interest is located at 20th minute to 28th minute in episode 18 of the TV series the Deer and the Cauldron". The computing device 102 may also provide a link of an episode (e.g., the episode 18) in the TV series "the Deer and the Cauldron" that includes the plot "the Emperor Kangxi captures Oboi cleverly", and simultaneously provide a time period of the plot in the video, e.g., 20th minute to 28th minute. In such case, the user 104 may directly obtain a time node corresponding to a video clip that the user is interested in and a link of the video, thereby facilitating the user 104 to view the clip that he/she is interested by clicking the link and locating to the corresponding time points. In addition, the user 104 may also conveniently view plots associated with the clip of interest.

It should be understood that such indication information may be generated in establishing the content retrieval library 101 and stored in the content retrieval library 101 in association with the corresponding key character.

Additional information associated with the key character 111, such as a comprehensive popularity score, may also be stored in the content retrieval library 101. As mentioned above with reference to establishing the content retrieval library 101, such additional information may be generated according to at least one of: the number of times that the key character 111 appears in the information item associated with the target portion (i.e., the character frequency of the key character), the number of times that the content 103 is viewed, clicked or downloaded, the number of comments on the content 103, and the score of the content 103.

The computing device 102 may retrieve the additional information, such as the comprehensive popularity score, stored in association with the key character from the content retrieval library 101 according to the determined key character. In some embodiments, the computing device 102 may, for example, provide the additional information to the user 104, such as providing the comprehensive popularity score, so that the user 104 may learn popularity levels of various content items (e.g., various videos) in content retrieval results, thereby helping the user 104 to decide a content item to be clicked on.

In some embodiments, the computing device 102 may provide the indication information 112 in the query result 105 according to the additional information. For example, the computing device 102 may determine a plurality of key characters matching the retrieval term, or a plurality of entries in the content retrieval library 101 at block 520. In such case, the computing device 102 may determine the order of occurrence of pieces of indication information associated with the plurality of key characters in the query result 105 according to the additional information. For example, the computing device 102 may rank key characters by comprehensive popularity scores, and may provide results of top N, such as providing the key characters, the time intervals, videos to which the key characters belong, and so on.

The above describes the process 500 for content retrieval according to some embodiments of the present disclosure. In this manner, the user may enter a relevant video page by clicking on a link (such as a URL) of the video of interest and narrow down the clip to be viewed according to the time interval. By providing the top N results according to the comprehensive popularity score, the quality of the video may be ensured, and the user may conveniently watch bullet comments, reviews as well as relevant plots.

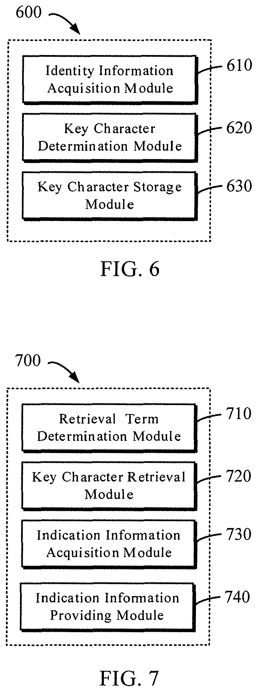

FIG. 6 is a schematic block diagram of an apparatus 600 for establishing a content retrieval library according to some embodiments of the present disclosure. The apparatus 600 may be included in or implemented as the computing device 102 of FIG. 1. As shown in FIG. 6, the apparatus 600 includes an identity information acquisition module 610 configured to acquire the identity information of the content to be processed. The identity information includes a plurality of information items, and each information item is associated with a portion of the content. The apparatus 600 further includes a key character determination module 620 configured to determine a key character corresponding to at least one portion of the content according to the identity information. The apparatus 600 further includes a key character storage module 630 configured to store the key character and indication information related to the at least one portion of the content into the content retrieval library in an associated manner.

In some embodiments, the key character determination module 620 includes: a first number determination module, configured to determine a first number of target information items associated with the at least one portion of the content from the plurality of information items; and an information item using module, configured to determine the key character according to the target information items in response to at least one of: the first number exceeding a first number threshold, and a ratio of the first number to a total number of the plurality of information items exceeding a ratio threshold.

In some embodiments, the information item using module includes: a candidate character acquisition module, configured to obtain at least one candidate character by performing at least one of the following items on the target information items: removing characters matched with preset characters from the target information items, removing a target information item having a number of characters smaller than a number threshold of characters from the target information items, removing a punctuation mark from the target information items, and removing characters in a predetermined category from the target information items; and a candidate character using module, configured to determine the key character according to the at least one candidate character.

In some embodiments, the at least one candidate character includes a plurality of candidate characters, and the candidate character using module includes: a second number determination module, configured to determine a second number of candidate characters which are the same or semantically related in the plurality of candidate characters; and a key character extraction module, configured to determine the key character according to the same or semantically related candidate characters in response to the second number exceeding a second number threshold.

In some embodiments, the apparatus 600 further includes an additional information determination module, configured to generate additional information associated with the at least one portion of the content according to at least one of: a number of times that the key character appears in the information item associated with the at least one portion, a number of times that the content is viewed, clicked or downloaded, a number of comments on the content, and a score of the content; and an additional information storage module, configured to store the additional information and the key character into the content retrieval library in an associated manner.

In some embodiments, the indication information includes at least one of: a link for obtaining the at least one portion of the content; location information indicating a relative location of the at least one portion in the content; and textual information indicating that the at least one portion is included in the content.

FIG. 7 is a schematic block diagram of an apparatus 700 for content retrieval according to some embodiments of the present disclosure. The apparatus 700 may be included in or implemented as the computing device 102 of FIG. 1. As shown in FIG. 7, the apparatus 700 includes a retrieval term determination module 710, configured to determine a retrieval term according to a query request for a target portion of content. The apparatus 700 further includes a key character retrieval module 720, configured to determine a key character matched with the retrieval term from a content retrieval library, in which the content retrieval library at least includes the key character and indication information stored in an associated manner with the key character and about the target portion, the key character is determined according to an information item associated with the target portion, and the information item is included in identity information of the content. The apparatus 700 further includes an indication information acquisition module 730, configured to acquire the indication information stored in the associated manner with the key character from the content retrieval library. The apparatus 700 further includes an indication information providing module 740, configured to provide the indication information to indicate the target portion.

In some embodiments, the indication information providing module 730 includes at least one of: a link providing module, configured to provide a link of the target portion; a location information providing module, configured to provide location information to indicate a relative location of the target portion in the content; and a textual information providing module, configured to provide textual information to indicate that the target portion is included in the content.

In some embodiments, the apparatus 700 further includes: an additional information acquisition module, configured to acquire additional information stored in an associated manner with the key character from the content retrieval library according to the key character; and an additional information providing module, configured to provide the additional information, in which the additional information is generated according to at least one of: a number of times that the key character appears in the information item associated with the target portion; a number of times that the content is viewed, clicked or downloaded; a number of comments on the content; and a score of the content.

In some embodiments, the apparatus 700 further includes: an identity information acquisition module, configured to acquire the identity information of the content, in which the identity information includes a plurality of information items, and each information item is associated with a portion of the content; a key character determination module, configured to determine the key character corresponding to at least one portion of the content according to the identity information; and a key character storage module, configured to store the determined key character and the indication information related to the at least one portion of the content into the content retrieval library in an associated manner.

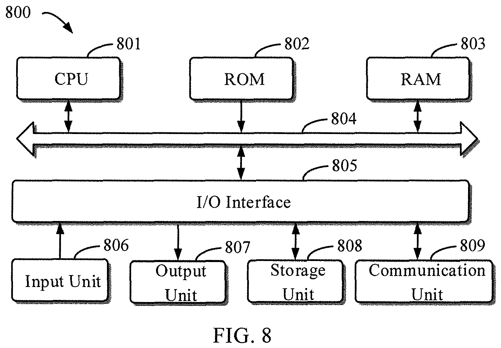

FIG. 8 is a schematic block diagram of an exemplary device capable of implementing various embodiments of the present disclosure. The device 800 may be configured to implement the computing device 102 as described in FIG. 1. As illustrated in the figure, the device 800 includes a central processing unit (CPU) 801, which may perform various suitable actions and processes in accordance with computer program instructions stored in a read only memory (ROM) 802 or loaded from a storage unit 808 into a random access memory (RAM) 803. In the RAM 803, various programs and data necessary for operations of the device 800 may also be stored. The CPU 801, the ROM 802, and the RAM 803 are connected to each other through a bus 804. An input/output (I/O) interface 805 is also connected to the bus 804.

A number of components in the device 800 are connected to the I/O interface 805, including: an input unit 806 such as a keyboard, a mouse, and the like; an output unit 807 such as various types of displays, speakers, etc.; the storage unit 808 such as a magnetic disk, an optical disk, or the like; and a communication unit 809 such as a network card, a modem, a wireless communication transceiver, and so on. The communication unit 809 allows the device 800 to exchange information/data with other devices via a computer network such as the Internet and/or various telecommunications networks.

The processing unit 801 performs the various methods and processes described above, such as any one of the processes 200, 300 and 500. For example, in some embodiments, any one of the processes 200, 300 and 500 may be implemented as a computer software program tangibly embodied on a machine-readable medium, such as the storage unit 808. In some embodiments, some or all of the computer programs may be loaded and/or installed onto the device 800 via the ROM 802 and/or the communication unit 809. When a computer program is loaded onto the RAM 803 and executed by the CPU 801, one or more steps in any one of the processes 200, 300 and 400 described above may be performed. Alternatively, in other embodiments, the CPU 801 may be configured to perform any one of the processes 200, 300 and 500 in any other suitable manner (e.g., by way of the firmware).

The functions described herein above may be performed, at least in part, by one or more hardware logic components. For example, and without limitation, exemplary types of the hardware logic components that may be used include: a field programmable gate array (FPGA), an application specific integrated circuit (ASIC), an application specific standard product (ASSP), a system on chip (SOC), a complex programmable logic device (CPLD), and the like.

Program codes for performing the method in the present disclosure may be written in any combination of one or more programming languages. These program codes may be provided to a processor or controller in a general-purpose computer, a special purpose computer, or other programmable data processing devices, such that the program codes, when executed by the processor or controller, are configured to implement functions/operations specified in the flow chart and/or block diagrams. The program code may be executed entirely on a machine, partly on the machine, as a separate software package, partly on the machine, partly on a remote computer, or entirely on the remote computer or server.

In the context of the present disclosure, the machine-readable medium may be a tangible medium that may contain, or store a program for use by or in combination with an instruction execution system, an apparatus, or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium may include: an electrical connection having one or more wires, a portable computer disk, a hard disk, a random access memory (RAM), a read only memory (ROM), an Erasable Programmable Read Only Memory (EPROM or a flash memory), an optical fiber, a compact disc read-only memory (CD-ROM), an optical memory component, a magnetic memory component, or any suitable combination thereof.

Moreover, while operations are described in a particular order, this should be understood as that the operations are required to be performed in a particular illustrated order or in a sequential order, or that all illustrated operations are required to be performed to achieve desirable results. In certain circumstances, multitasking and parallel processing may be advantageous. Likewise, while several specific implementation details are included in the above discussion, these should not be construed as limiting the scope of the present disclosure. Certain features described in the context of separate embodiments may also be implemented in combination in a single implementation. Conversely, features that are described in the context of the single implementation may also be implemented in a plurality of implementations separately or in any suitable sub-combination.

Although the subject matter has been described in a language specific to structural features and/or methodological acts, it is to be understood that the subject matter defined in the attached claims is not necessarily limited to the specific features or acts described above. Instead, the specific features and acts described above are merely exemplary forms for implementing the attached claims.

## Claims

1. A method for establishing a content retrieval library, comprising:
acquiring (210) identity information of content to be processed, the identity information comprising a plurality of information items, and each information item being associated with a portion of the content;
determining (220) a key character corresponding to at least one portion of the content according to the identity information; and
storing (230) the key character and indication information related to the at least one portion of the content into the content retrieval library in an associated manner.

2. The method of claim 1, wherein determining (220) the key character comprises:
determining (310) a first number of target information items associated with the at least one portion of the content from the plurality of information items; and
determining (320) the key character according to the target information items in response to at least one of:
the first number exceeding a first number threshold, and
a ratio of the first number to a total number of the plurality of information items exceeding a ratio threshold.

3. The method of claim 2, wherein determining the key character according to the target information items comprises:
obtaining (330) at least one candidate character by performing at least one of the following items on the target information items:
removing characters matched with preset characters from the target information items,
removing a target information item having a number of characters smaller than a number threshold of characters from the target information items,
removing a punctuation mark from the target information items, and
removing characters in a predetermined category from the target information items; and
determining the key character according to the at least one candidate character.

4. The method of claim 3, wherein the at least one candidate character comprises a plurality of candidate characters, and determining the key character according to the at least one candidate character comprises:
determining (340) a second number of candidate characters which are the same or semantically related in the plurality of candidate characters; and
determining (360) the key character according to the same or semantically related candidate characters in response to the second number exceeding a second number threshold.

5. The method of any one of claims 1 to 4, further comprising:
generating additional information associated with the at least one portion of the content according to at least one of:
a number of times that the key character appears in the information item associated with the at least one portion,
a number of times that the content is viewed, clicked or downloaded,
a number of comments on the content, and
a score of the content; and
storing the additional information and the key character into the content retrieval library in an associated manner.

6. The method of any one of claims 1 to 5, wherein the indication information comprises at least one of:
a link for obtaining the at least one portion of the content;
location information indicating a relative location of the at least one portion in the content; and
textual information indicating that the at least one portion is included in the content.

7. The method of any one of claims 1 to 6, further comprising:
determining a retrieval term according to a query request for a target portion of content;
determining a key character matched with the retrieval term from the content retrieval library;
acquiring the indication information stored in an associated manner with the key character from the content retrieval library; and
providing the indication information to indicate the target portion.

8. The method of claim 7, further comprising:
acquiring additional information stored in an associated manner with the key character from the content retrieval library according to the key character; and
providing the additional information.

9. An apparatus for establishing a content retrieval library, comprising:
an identity information acquisition module (610), configured to acquire identity information of content to be processed, the identity information comprising a plurality of information items, and each information item being associated with a portion of the content;
a key character determination module (620), configured to determine a key character corresponding to at least one portion of the content according to the identity information; and
a key character storage module (630), configured to store the key character and indication information related to the at least one portion of the content into the content retrieval library in an associated manner.

10. The apparatus of claim 9, wherein the key character determination module (620) comprises:
a first number determination module, configured to determine a first number of target information items associated with the at least one portion of the content from the plurality of information items; and
an information item using module, configured to determine the key character according to the target information items in response to at least one of:
the first number exceeding a first number threshold, and
a ratio of the first number to a total number of the plurality of information items exceeding a ratio threshold.

11. The apparatus of claim 10, wherein the information item using module comprises:
a candidate character acquisition module, configured to obtain at least one candidate character by performing at least one of the following items on the target information items:
removing characters matched with preset characters from the target information items,
removing a target information item having a number of characters smaller than a number threshold of characters from the target information items,
removing a punctuation mark from the target information items, and
removing characters in a predetermined category from the target information items; and
a candidate character using module, configured to determine the key character according to the at least one candidate character.

12. The apparatus of claim 11, wherein the at least one candidate character comprises a plurality of candidate characters, and the candidate character using module comprises:
a second number determination module, configured to determine a second number of candidate characters which are the same or semantically related in the plurality of candidate characters; and
a key character extraction module, configured to determine the key character according to the same or semantically related candidate characters in response to the second number exceeding a second number threshold.

13. The apparatus of any one of claims 9 to 12, further comprising:
an additional information determination module, configured to generate additional information associated with the at least one portion of the content according to at least one of:
a number of times that the key character appears in the information item associated with the at least one portion,
a number of times that the content is viewed, clicked or downloaded,
a number of comments on the content, and
a score of the content; and
an additional information storage module, configured to store the additional information and the key character into the content retrieval library in an associated manner.

14. The apparatus of any one of claims 9 to 13, wherein the indication information comprises at least one of:
a link for obtaining the at least one portion of the content;
location information indicating a relative location of the at least one portion in the content; and
textual information indicating that the at least one portion is included in the content.

15. A computer-readable storage medium having a computer program stored thereon, wherein when the program is executed by a processor, the program implements the method of any one of claims 1 to 8.
